# EUROPEAN PATENT SPECIFICATION

(11) **EP 4 365 475 B1**
(45) Date of publication and mention of the grant of the patent: **24.12.2025**
(21) Application number: 22383062.1
(22) Date of filing: 04.11.2022
(51) Int. Cl.: F16L 59/18

(54) **ENCASEMENT FOR MOVABLE HEAT TRANSFER FLUID CONDUITS**
UMHÜLLUNG FÜR BEWEGLICHE WÄRMEÜBERTRAGUNGSFLÜSSIGKEITSLEITUNGEN
ENVELOPPE POUR CONDUITS DE FLUIDE DE TRANSFERT DE CHALEUR MOBILES

(43) Date of publication of application: 08.05.2024
(73) Proprietor: KAEFER SERVICIOS INDUSTRIALES S.A.U., 48950 Erandio (Bizkaia) (ES)
(72) Inventor: Calle, Marcos, 48950 ERANDIO (Bizkaia) (ES)
(74) Representative: Carlos Hernando, Borja

(56) References cited:
- CN-Y- 2 649 922
- FR-A1- 2 490 775
- GB-A- 2 255 818
- US-A- 4 124 357
- US-A1- 2009 078 499
- US-A1- 2015 076 814
- US-B2- 10 697 346

## Description

### OBJECT OF THE INVENTION

The invention, encasement for movable heat transfer fluid conduits, relates to the encasement for covering heat transfer fluid pipes preferably in solar thermal plants, which pipes form the single or double movable arms which allow the mirrors of a solar field to move following the direction of the sun throughout the day. Said encasement is the type comprising at least one outer metal layer and an intermediate insulating layer, forming tube segments and rotating casings, divided into respective halves which are fixed by means of closures, covering the pipes, and movable joints or ball joints which define the different parts of said conduits. Among other particularities, it is essentially distinguished by the fact that there is envisaged at the joint between the tube segments and the swivel casings the existence of a channel with a U-shape on the perimeter of at least one end of the tube into which an L-shaped edge of the casing is inserted.

The field of application of the present invention is comprised within the sector of the industry dedicated to the manufacture of solar thermal installations, focusing particularly on the field of encasement systems for heat transfer fluid conduits.

### BACKGROUND OF THE INVENTION

As is known, solar thermal fields incorporate solar panels or mirrors which, by means of specific control systems, move so that they are always oriented in the best way possible towards the position of the sun such that the incidence of rays is optimal at any time of the day. Due to this movement, the conduits carrying the heat transfer fluid must also be able to move, for which they are made up of pipe segments joined by means of swivel joints referred to as ball joints. In general, solar thermal plants comprise pipes in the form of single or double arms depending on the position they occupy between the fixed mirror pipes which is either at the beginning or in intermediate positions.

In any case, these pipes require an insulating encasement which protects the conduits from bad weather and temperature changes in order to prevent heat loss, but which must allow the movement of the mentioned arms, particularly at the swivel points of the joints or ball joints.

To that end, historically, these arms or pipes were insulated by means of flexible mats which were discarded as a result of excessive water seepage and a high risk of burning due to the solar radiation reflected by the mirrors given that they are formed by an inner layer of glass fibre fabric with a stainless steel sheet, an intermediate ceramic fiber insulating layer of about 25 mm thick, and an outer layer of glass fiber fabric coated with silicone or Teflon.

Another known insulation system contemplates the use of a mixed system which combined the mentioned mats with a metal layer, however, it had the same problems as the flexible mats described above.

US 4 124 357 A discloses a catalytic converter having an outer casing formed as a cylindrical element having openings at opposite ends, the casing made of an assembly of two semi-cylindrical shell elements.

Another insulation system is described in patent application number ES2530502A1, specifically an encasement comprising an outer metal layer, an intermediate layer of up to 35 mm of microporous material, and an inner layer of stainless steel sheet of foil forming tube segments, elbows, and swivel casings, with the latter being divided into two halves. These parts are joined to one another by means of clamps coupled to flanges provided for this purpose at the ends of the tube segments, which flanges have a larger dimension at the joint with a cover of the casing, specifically of between 10 to 15 mm, in order to prevent the entry of water. However, this system presents aspects that can be improved, particularly with respect to the structure of the joint between the tube segments and casing, where the objective of the present invention is to develop a new encasement of this type which provides improvements in this and some other aspects.

Specifically, the metal casings object of the earlier patent application were commonly used in the conventional insulation used up until that time and the stainless steel foil or sheet in the inner layer was already used in metal encasements on inner faces in casings of this type in nuclear installations (reflective insulation systems). In turn, the flange of the encasement which partially prevents possible water seepage at the joint with the tube segments differs from previous solutions in that it is longer. However, this is nothing more than the typical system of joining two metal tubes by means of male-female beads, i.e., one emerging towards the outside (flange of the tubes) and the other towards the inside (cover of the casing).

In any case, this joint between the tube and the casing for solar thermal conduit application does not completely ensure that the entry of water is prevented, where one of the main objectives of the present invention is to improve this aspect by means of the development of a new joint structure between the casing and the tube that allows rotation between both elements, preventing the entry of water in the intermediate insulating layer arranged between the pipe and the encasing tube and between the joint and the casing.

Likewise, as regards interior insulation by means of a microporous material of up to 35 mm thick, due to its peculiarity of a low thermal conductivity, it is a very suitable insulating material when the thicknesses of the insulating material is to be reduced, while maintaining high insulating performance. However, it has the drawback of being hydrophilic and of absorbing moisture (water) quickly and, in such case, losing its insulating properties. Hence, there is a need to encapsulate it with an inner layer of stainless steel sheet or foil and to thereby reduce the possibility of it coming into contact with possible liquids from leaked oil and/or environmental moisture, rain, etc. Therefore, another objective of the present invention is to provide an encasement with an insulator which prevents said problems.

Finally, and as a reference to the current state of the art, it should be pointed out that, although other encasements of the type referred to herein are known, at least the applicant is unaware of the existence of any other encasement having the technical and structural features of the one claimed herein.

### DESCRIPTION OF THE INVENTION

The present invention therefore proposes an encasement for movable heat transfer fluid conduits, preferably applicable in solar thermal plants, according to claim 1.

Specifically, the encasement object of the invention is used for movable heat transfer fluid conduits, said conduits having at least one movable joint and pipes connected to said movable joint. The encasement comprises at least one cylindrical casing and two tubes, each connected to either side of the casing. The casing has two flat side walls in the shape of a circular crown, and a circular wall connected perpendicularly to the outer ends of the circular crowns. The casing object of the invention is divided into two semi-cylindrical halves with closure means between said halves. Each semi-cylindrical half has two side walls in the shape of a half circular crown and a semi-cylindrical wall joined to the outer end of the two halves of the circular crowns. In that sense, the encasement is formed when both halves of the casing are joined together and determine two first circular openings, one on each of the two sides of the casing, corresponding to the opening or inner circle of the circular crown and to a diameter delimited by a first edge of said inner circle of the circular crown, together with two cylindrical tube segments which determine a second opening with a second cylindrical edge at each end.

To achieve and facilitate coupling between the two tubes and the casing, the first edge of the first opening of the casing has a structural configuration with an L-shape determining the diameter of the first opening of the casing. This occurs on both side walls of the casing. Moreover, the second edge of at least the coupling end of each tube coupled to the casing has a structural configuration in the form of a channel with a U-shape. To achieve said coupling between the tubes and the casing, the tube has at least one outer diameter and at least one inner diameter, smaller than the outer diameter, said diameter coinciding with the bottom of the channel with a U-shape of the second edge at the ends of the tubes, such that the first edge with an L-shape of the walls of the casing is inserted into the channel with a U-shape of the second edge.

In that sense, the first edge of the casing with a U-shape acts as a rail along which the channel with an L-shape of the ends of the tubes can slide, such that the casing slides over the cylindrical segment or vice versa, thereby preventing sharp corners on the edges which will damage the elements on which they contact, i.e., preventing damage of the tube on the casing and vice versa.

Likewise, to ensure that the casing and the tube segments remain in contact during their relative movement, the diameter of the first opening of the casing is larger than the inner diameter of the pipe and in turn said diameter of the first opening is smaller than the outer diameter of the second edge with a U-shape of the tube. Therefore, the insulating encasement object of the invention is particularly intended for covering heat transfer fluid pipes in a solar panel installation or solar field, particularly pipes in the form of single or double movable arms, which allow the mirrors of the solar field to move following the direction of the sun.

In addition, the encasement preferably comprises at least the outer metal layer, preferably outer aluminum layer, formed by the casing and the tubes, and an intermediate insulating layer, arranged between the casing and the joint and between the tubes and the pipes. The insulating layer is arranged in the casing divided into two halves, one in each semi-cylindrical half of the casing, whereas in the tubes they are arranged inside same, creating a cylinder that surrounds the pipe. The two halves of the insulating layer arranged in the casing preferably overlap at each of their two ends in order to reduce energy loss with respect to solutions that could simply contact one end with the other.

The tube segments of the encasement can be straight or zig-zag segments and comprise elbows, being adapted to the corresponding straight or zig-zag segments and elbows of the pipe. In that sense, the casings have sufficient dimensions to comfortably receive the dimension of the joints of the conduit, joining the tubes and casings, according to the description already made, between the respective edges of the outer metal layer of the casing and that of the cylindrical tubes.

The encasement object of the invention is essentially distinguished by the fact that the edges of the outer metal layer of the tube segments, or second edges, are joined respectively to the first edges of the side openings of the outer layer of the casing by means of the mutual coupling of the edges of a casing with two tubes. To that end, as mentioned, at least the second edge of at least one end of each of the tubes has a structural configuration in the form of a channel with a U-shape, open towards the outside of the tube, and there is inserted into said channel with a U-shape a structural configuration with an L-shape provided in a complementary manner to the channel with a U-shape at the first edge of each opening of the outer layer of the casing. Said structure with an L-shape is oriented towards the inside of the casing.

Therefore, in order to prevent both the entry of water and the leakage of oil, the design of said channel with a U-shape of the second edge of the tube is sized so that the L-shaped flange of the first edge of the casing can be supported therein, making the uncoupling thereof as a result expansion more difficult, making the possible passage of water therethrough more unlikely and, moreover, preventing the sharp corner of a straight flange, present in the known systems, from constantly rubbing against the sheet metal, causing the aluminum to deteriorate.

Furthermore, preferably, the L-shaped flange of the first edge has a width (x) smaller than the width (i) of the channel with a U-shape of the second edge of the cylindrical tube segment. Likewise, the structural configuration with a U-shaped of the second edge of the tube segment has a length of at least 20 mm on its free wall or side, in order to ensure the absence or minimal presence of water seepage, as well as to minimize friction between sheet metals and prevent possible disengagement or uncoupling between the casing and the tubes.

Moreover, according to another feature of the invention, the intermediate insulating layer of the encasement is preferably an intermediate aerogel insulating layer and has a total thickness of at least 40 mm, preferably formed by two layers of 20 mm each. Preferably, the aerogel is from the manufacturer ARMACELL^{®}. In any case, it is a highly insulating material which, in addition, satisfactorily meets the needs of the specifications of solar installations for which the encasement is intended, which usually has an outer face temperature close to 60°C, obtaining an energetically adequate loss.

The two layers of this aerogel insulating material are installed fixed to the inner face of the outer metal layer of the casing. Being a completely hydrophobic material, it repels water and moisture.

Optionally, the encasement further includes an inner layer of stainless steel sheet or foil which protects the insulating layer in the event of thermal oil leakage, given that said thermal oil can reach up to 400°C, although said layer is not strictly necessary, particularly given the fact that the intermediate aerogel layer is 40 mm thick and that this material is stable up to temperatures of around 650°C.

Finally, according to another feature of the invention, the closure means for mutually fixing the respective semi-cylindrical halves of the outer layer of the encasement around the pipes to be covered, at least in the casings, are formed by expansion springs, which, unlike fixed closures, allow absorbing dilations due to high temperature changes existing in these installations and, at the same time, ensure that the casings are not so rigid.

### DESCRIPTION OF THE DRAWINGS

To complete the description of the present invention and in order to facilitate the understanding of its features, the present specification includes, as an integral portion thereof, a set of figures of an illustrative and non-limiting nature.
Figure 1 shows a schematic perspective and partially sectioned view of a portion of an example of the encasement object of the invention, specifically a portion covering a casing and the ends of two tube segments, with the parts and elements it comprises, as well as the configuration and arrangement thereof, being shown.
Figure 2 shows an enlarged view of detail A shown in Figure 1, in which the configuration of the encasement at the joint between the end of the tube and the casing can be seen in greater detail in a perspective view.

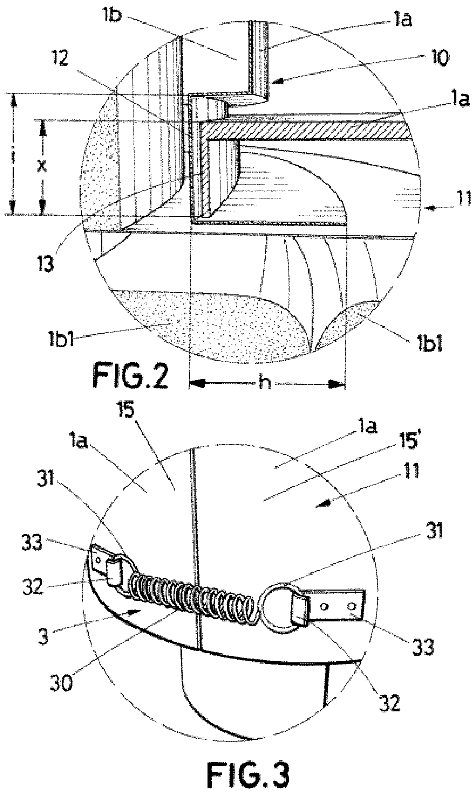

Furthermore, Figure 3 shows a view of one of the closure means in the form of an extension comprising the encasement for externally joining the two halves of the casing.

### PREFERRED EMBODIMENT OF THE INVENTION

An embodiment of the invention is described below in view of the mentioned figures.

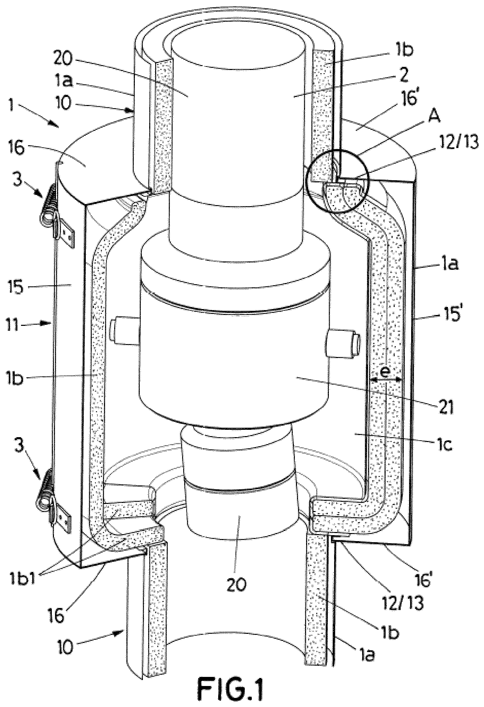

In that sense, as shown in Figure 1, the encasement (1) of the invention, applicable for conduits (2), formed by a swivel joint (21) or ball joints, and two pipes (20) for heat transfer fluid, comprises a casing (11) and two tube segments (10) which in turn comprise at least one outer metal layer (1a), preferably an outer aluminum layer, and an intermediate layer (1b) of insulating material, closer to the joint (21) and the pipes (20). The casing (11) is divided into respective semi-cylindrical halves (15, 15') which are fixed to one another with closure means (3) around a joint (21) to both sides of which a pipe (20) is connected. In that sense, the tube segments (10), surrounding the pipes (20) have at their ends a smaller diameter than the diameter of the opening of the swivel casings (11) surrounding the joint (21), such that the ends of said tubes (10) are coupled to the side openings of the casing (11), which are of a larger diameter surrounding said ends of the tubes (10). The ends of the insulating material introduced into the casing and the tubes preferably overlap one another, preventing the continuity of the joints in order to reduce energy loss.

The casing (11) has, with its two halves (15, 15') joined together, two flat side walls (16, 16') in the shape of a circular crown, and a circular wall (15, 15') connected perpendicularly to the outer ends of the side walls (16, 16') in the shape of a circular crown. As mentioned, the casing (11) is divided into two semi-cylindrical halves (15, 15') with closure means (3) between said halves (15, 15'). Each semi-cylindrical half (15, 15') has two side walls (16, 16') in the shape of a half circular crown and a semi-cylindrical wall (15, 15') joined to the outer end of the two halves (16, 16') of the circular crowns. In that sense, the encasement (2) is formed when both halves (15, 15') of the casing (11) are joined together and determine two first circular openings, one on each of the two sides (16, 16') of the casing (11), corresponding to the opening or inner circle of the circular crown and to a diameter delimited by a first edge (13) of said inner circle of the circular crown, together with two cylindrical tube segments (10) which determine a second opening with a second cylindrical edge (12) at each end.

The encasement (1) has the second edges (12) of the tube (10) constituting the outer metal layer (1a) of the tube segments (10), a structural configuration in the form of a channel with a U-shape (12) open towards the outer face of said tubes (10) into which there is inserted, as can be seen in the enlarged detail of Figure 2, the first edge of the casing (11) with an structure with an L-shape (13) provided in a complementary manner on the side walls (16, 16') of the two halves of the outer layer (1a) of the casing (11) and oriented towards the inside of the semi-cylindrical body constituting each half (15, 15'), such that the tube (10) and the casing (11) are joined by means of coupling said first and second edges with the channel with a U-shape (12) and the structure with an L-shape (13) of the two halves thereof.

Furthermore, the channel with a U-shape (12) of the second edge of the outer layer (1a) of the tube (10) is sized so that the structure with an L-shape (13) of the first edge of the outer layer (1a) of the casing (11) is supported therein, but allowing rotational movement about said channel with a U-shape (12), so that the channel with a U-shape (12) of the tube (10) acts as a rail for guiding the structure with an L-shape (13) of the casing (11).

Furthermore, the structure with an L-shape (13) of the casing (11) preferably has a width (x) smaller than the width (i) of the channel with a U-shape (12). Moreover, the depth of said channel with a U-shape (12) is limited on the one hand by the outer diameter of the tube (10), which is outside the casing (11), and on the other hand by a wall, which forms the free side of the tube (10), of at least 20 mm, from the base of the channel with a U-shape (12) that is inside the casing (11), in order to prevent the first edge with an L-shape (13) of the casing (11) from coming out of the second edge with a U-shape (12) of the tube (10), thus ensuring the leaktightness of the conduit (2).

In that sense, when the two halves (15, 15') of the casing (11) are connected, i.e., closed, they determine two openings, one in each side wall (16, 16') of the casing (11) with the first edge with an L-shape (13), which determines the diameter of the opening of the casing (11). The cylindrical tube segments (10) also determine at their ends a second opening, with at least one of said ends having the second cylindrical edge in the form of a channel with a U-shape (12). The other end may or may not have an edge with such a channel with a U-shape, for example, it may have a male-female bead joint for joining with the next tube or elbow. In any case, this second end of the tube (10) will be adapted to the necessary connection of said end.

According to the foregoing, the second edge on the tube (10) has an outer diameter, coinciding with the outer diameter of the tube (10), and an inner diameter, smaller than the outer diameter, coinciding with the bottom of the channel with a U-shape (12) of the second edge, such that the first edge with an L-shape (13) is inserted into the channel with a U-shape (12) of the second edge, with one of its sides inside the casing (11).

To ensure the correct positioning between the casing (11) and the cylindrical tube segments (10), the diameter of the first opening of the casing (11) is larger than the inner diameter and smaller than the outer diameter of the second edge with a U-shape (12) of the cylindrical tube (10).

With respect to the insulation used, it is preferably an intermediate aerogel layer (1b) with a total thickness (e) of 40 mm. Preferably, the intermediate aerogel insulating layer (1b) is in turn formed by two overlapping layers (1b1) of 20 mm each.

Alternatively, the encasement (1) may further include an inner layer (1c) of stainless steel sheet which protects the intermediate insulating layer (1b).

Lastly, in reference to Figure 3 it can be seen how, in a preferred embodiment, the closure means (3) comprised in the encasement for mutually fixing the two semi-cylindrical halves (15, 15') of the outer layer (1a) of the casing (11) around the joint of the conduits (2) comprise one or more expansion springs (30). To that end, the spring (30) preferably has respective securing rings (31) at each end which can be secured to the bent claw (32) of flats (33) fixed externally to the outer layer (1a) of each half (15, 15') of the casing (11) in an integral manner.

## Claims

1. An encasement (1) for movable heat transfer fluid conduits (2), which conduits have at least one movable joint (21) and pipes (20), comprising at least
- one cylindrical casing (11), divided into two semi-cylindrical halves (15, 15') with closure means (3) between them, the casing having two flat side walls (16, 16') in the shape of a circular crown and a circular wall (15, 15') connected perpendicularly to the outer ends of the side walls (16, 16'), the casing further comprising two first cylindrical openings, one on each of the two side walls (16, 16') of the casing (11) with a diameter delimited by a first cylindrical edge when the two halves are joined, and
- two cylindrical tube segments (10), each cylindrical tube segment (10) having an end coupled to one of said first cylindrical openings and further comprising at each end that connects to the casing a second opening with a second cylindrical edge,
**characterised in that**,
the first edge of the first cylindrical opening of the casing (11) has a structural configuration with an L-shape (13) which determines the diameter of the first cylindrical opening of the casing (11),
and the second cylindrical edge of the tube segment (10) has a structural configuration in the form of a channel with a U-shape (12), with an outer diameter coinciding with the outer diameter of the tube (10) and an inner diameter, smaller than the outer diameter, coinciding with the bottom of the channel with a U-shape (12) of the second edge,
with the first edge with an L-shape (13) being supported within the channel with a U-shape (12) of the second edge.

2. The encasement according to claim 1, **characterised in that** the diameter of the first opening of the casing (11) is larger than the inner diameter and smaller than the outer diameter of the second edge with a U-shape (12) of the tube segment (10).

3. The encasement according to any of the preceding claims, **characterised in that** the structural configuration with an L-shape (13) of the casing (11) has a width (x), in the axial direction, smaller than the width (i) of the channel with a U-shape (12).

4. The encasement according to any of the preceding claims, **characterised in that** the free side or wall of the structural configuration with the U-shape (12) of the tube segment (10) has a length, in the radial direction, of at least 20 mm.

5. The encasement according to any of the preceding claims, **characterised in that** each half of the casing (15, 15') comprises an outer metal layer (1a) and an intermediate insulating layer (1b) which will be located between the outer layer and the joint (21).

6. The encasement according to claim 5, **characterised in that** the intermediate insulating layer (1b) is made of aerogel.

7. The encasement according to claim 6, **characterised in that** the intermediate aerogel insulating layer (1b) has a total thickness (e) of 40 mm.

8. The encasement according to claims 6 or 7, **characterised in that** the intermediate aerogel insulating layer (1b) is in turn formed by two overlapping layers (1b1) of 20 mm each.

9. The encasement according to any of the preceding claims, **characterised in that** the closure means (3) comprise at least one expansion spring (30).

## Patentansprüche

1. Umhüllung (1) für bewegliche Wärmeübertragungsflüssigkeitsleitungen (2), wobei die Leitungen mindestens ein bewegliches Gelenk (21) und Röhre (20) aufweisen, umfassend mindestens
- ein zylindrisches Gehäuse (11), das in zwei halbzylindrische Hälften (15, 15') mit Verschlussmitteln (3) dazwischen unterteilt ist, wobei das Gehäuse zwei flache Seitenwände (16, 16') in Form einer kreisförmigen Krone und eine kreisförmige Wand (15, 15') aufweist, die senkrecht mit den Außenenden der Seitenwände (16, 16') verbunden ist, wobei das Gehäuse ferner zwei erste zylindrische Öffnungen umfasst, eine an jeder der beiden Seitenwände (16, 16') des Gehäuses (11) mit einem Durchmesser, der durch einen ersten zylindrischen Rand begrenzt ist, wenn die beiden Hälften verbunden sind, und
- zwei zylindrische Rohrsegmente (10), wobei jedes zylindrische Rohrsegment (10) ein mit einer der ersten zylindrischen Öffnungen gekoppeltes Ende aufweist und ferner an jedem Ende, das mit dem Gehäuse verbunden ist, eine zweite Öffnung mit einem zweiten zylindrischen Rand umfasst,
**dadurch gekennzeichnet, dass**
der erste Rand der ersten zylindrischen Öffnung des Gehäuses (11) eine strukturelle Konfiguration mit einer L-Form (13) aufweist, die den Durchmesser der ersten zylindrischen Öffnung des Gehäuses (11) bestimmt,
und der zweite zylindrische Rand des Rohrsegments (10) eine strukturelle Konfiguration in Form eines Kanals mit einer U-Form (12) aufweist, mit einem Außendurchmesser, der mit dem Außendurchmesser des Rohrs (10) übereinstimmt, und einem Innendurchmesser, der kleiner ist als der Außendurchmesser, der mit dem Boden des Kanals mit einer U-Form (12) des zweiten Rands übereinstimmt,
wobei der erste Rand mit einer L-Form (13) innerhalb des Kanals mit einer U-Form (12) des zweiten Randes getragen wird.

2. Umhüllung nach Anspruch 1, **dadurch gekennzeichnet, dass** der Durchmesser der ersten Öffnung des Gehäuses (11) größer als der Innendurchmesser und kleiner als der Außendurchmesser des zweiten Randes mit einer U-Form (12) des Rohrsegmentes (10) ist.

3. Umhüllung nach einem der vorhergehenden Ansprüche, **dadurch gekennzeichnet, dass** die strukturelle Konfiguration mit einer L-Form (13) des Gehäuses (11) eine Breite (x) in axialer Richtung aufweist, die kleiner ist als die Breite (i) des Kanals mit einer U-Form (12).

4. Umhüllung nach einem der vorhergehenden Ansprüche, **dadurch gekennzeichnet, dass** die freie Seite oder Wand der strukturellen Konfiguration mit der U-Form (12) des Rohrsegments (10) eine Länge in radialer Richtung von mindestens 20 mm aufweist.

5. Umhüllung nach einem der vorhergehenden Ansprüche, **dadurch gekennzeichnet, dass** jede Hälfte des Gehäuses (15, 15') eine äußere Metallschicht (1a) und eine isolierende Zwischenschicht (1b) umfasst, die sich zwischen der Außenschicht und dem Gelenk (21) befinden wird.

6. Umhüllung nach Anspruch 5, **dadurch gekennzeichnet, dass** die isolierende Zwischenschicht (1b) aus Aerogel hergestellt ist.

7. Umhüllung nach Anspruch 6, **dadurch gekennzeichnet, dass** die isolierende Aerogel-Zwischenschicht (1b) eine Gesamtstärke (e) von 40 mm aufweist.

8. Umhüllung nach Anspruch 6 oder 7, **dadurch gekennzeichnet, dass** die isolierende Aerogel-Zwischenschicht (1b) ihrerseits aus zwei sich überlappenden Schichten (1b1) von je 20 mm gebildet ist.

9. Umhüllung nach einem der vorhergehenden Ansprüche, **dadurch gekennzeichnet, dass** die Verschlussmittel (3) mindestens eine Spreizfeder (30) umfassen.

## Revendications

1. Habillage (1) pour conduits mobiles de fluide de transfert de chaleur (2), lesquels présentent au moins un joint mobile (21) et des tuyaux (20), comprenant au moins
- un boîtier cylindrique (11), divisé en deux moitiés semi-cylindriques (15, 15') avec des moyens de fermeture (3) entre elles, le boîtier présentant deux parois latérales plates (16, 16') en forme de couronne circulaire et une paroi circulaire (15, 15') reliée perpendiculairement aux extrémités extérieures des parois latérales (16, 16'), le boîtier comprenant en outre deux premières ouvertures cylindriques, une sur chacune des deux parois latérales (16, 16') du boîtier (11) avec un diamètre délimité par un premier bord cylindrique lorsque les deux moitiés sont jointes, et
- deux segments de tube cylindriques (10), chaque segment de tube cylindrique (10) présentant une extrémité accouplée à l'une desdites premières ouvertures cylindriques et comprenant en outre, à chaque extrémité reliée au boîtier, une seconde ouverture avec un second bord cylindrique,
**caractérisé en ce que**,
le premier bord de la première ouverture cylindrique du boîtier (11) présente une configuration structurelle en forme de L (13) qui détermine le diamètre de la première ouverture cylindrique du boîtier (11),
et le second bord cylindrique du segment de tube (10) présente une configuration structurelle sous la forme d'un canal en forme de U (12), avec un diamètre extérieur coïncidant avec le diamètre extérieur du tube (10) et un diamètre intérieur, plus petit que le diamètre extérieur, coïncidant avec le fond du canal en forme de U (12) du second bord,
le premier bord en forme de L (13) étant soutenu au sein du canal par une forme en U (12) du second bord.

2. Habillage selon la revendication 1, **caractérisé en ce que** le diamètre de la première ouverture du boîtier (11) est plus grand que le diamètre intérieur et plus petit que le diamètre extérieur du second bord en forme de U (12) du segment de tube (10).

3. Habillage selon l'une quelconque des revendications précédentes, **caractérisé en ce que** la configuration structurelle en forme de L (13) du boîtier (11) présente une largeur (x), dans la direction axiale, plus petite que la largeur (i) du canal en forme de U (12).

4. Habillage selon l'une quelconque des revendications précédentes, **caractérisé en ce que** le côté ou la paroi libres de la configuration structurelle en forme de U (12) du segment de tube (10) présente une longueur, dans la direction radiale, d'au moins 20 mm.

5. Habillage selon l'une quelconque des revendications précédentes, **caractérisé en ce que** chaque moitié du boîtier (15, 15') comprend une couche métallique extérieure (1a) et une couche isolante intermédiaire (1b) qui sera située entre la couche extérieure et le joint (21).

6. Habillage selon la revendication 5, **caractérisé en ce que** la couche isolante intermédiaire (1b) est constituée d'aérogel.

7. Habillage selon la revendication 6, **caractérisé en ce que** la couche isolante intermédiaire en aérogel (1b) présente une épaisseur totale (e) de 40 mm.

8. Habillage selon les revendications 6 ou 7, **caractérisé en ce que** la couche isolante intermédiaire en aérogel (1b) est à son tour formée de deux couches superposées (1b1) de 20 mm chacune.

9. Habillage selon l'une quelconque des revendications précédentes, **caractérisé en ce que** les moyens de fermeture (3) comprennent au moins un ressort de dilatation (30).
